# EUROPÄISCHE PATENTANMELDUNG

(11) **EP 1 120 031 A2**
(43) Veröffentlichungstag der Anmeldung: **01.08.2001**
(21) Anmeldenummer: 01890020.9
(22) Anmeldetag: 23.01.2001
(51) Int. Cl.: A01G 25/09

(54) **Beregnungsmaschine**

(30) Priorität: 28.01.2000 AT 1322000
(71) Anmelder: Röhren- und Pumpenwerk Bauer Gesellschaft mbH, 8570 Voitsberg (AT)
(72) Erfinder: Jung, Karl, Ing., 8570 Voitsberg (AT); Klug, Erich, Ing., 8580 Köflach (AT); Wolfbauer, Wilhelm, Dipl.-Ing., 8074 Raaba (AT)
(74) Vertreter: Patentanwälte BARGER, PISO & PARTNER

(57) **Zusammenfassung**

Die Erfindung betrifft eine Beregnungsmaschine, die ein Fahrwerk mit einer Deichsel (4), eine Rohrtrommel (5) mit einem auf- und abwickelbaren Kunststoffrohr (8), einen Turbinen-, Wasserkolben- oder Verbrennungsmotorantrieb, sowie ein auf das Fahrwerk zuladbares Stativ (7) oder Wagen mit Großflächenregner, Düsenausleger oder ähnliche, der Wasserverteilung dienende Einrichtung aufweist

Die Erfindung ist dadurch gekennzeichnet, daß die Deichsel (4) längsverschieblich im Fahrwerk gelagert und an beiden Enden mit einer Kupplungsvorrichtung (12) versehen ist und daß, in an sich bekannter Weise, ein die Rohrtrommel (5) tragender Bock (6) um eine vertikale Achse (14) des Fahrwerkes drehbar gelagert ist.

## Beschreibung

Die Erfindung betrifft eine Beregnungsmaschine, die im wesentlichen aus einem Fahrwerk, einer Rohrtrommel mit einem auf- und abwickelbaren Kunststoffrohr, einem Turbinen-, Wasserkolben- oder Verbrennungsmotorantrieb besteht, sowie einem auf das Fahrwerk zuladbaren Stativ oder Wagen mit Großflächenregner, Düsenausleger oder ähnlichen, der Wasserverteilung dienenden Einrichtungen.

Beregnungsmaschinen dieser Art sind in verschiedenen Ausführungen bekannt und einander im speziellen darin ähnlich, dass die Anhängung an den Traktor beim Transport zum Feld und auf dem Feld selbst auf der einen Seite (= Vorderseite) des Fahrwerkes erfolgt und dass das die Wasserverteileinrichtung tragende Stativ sich dabei auf der anderen Seite (= Rückseite) des Fahrwerkes befindet. Dies hat den Nachteil, dass beim Einfahren in eine Beregnungsgasse der Traktor die Maschine rückwärts hineinschieben muss, um die Maschine in eine arbeitsgerechte Position zu bringen. Um das Stativ auszuziehen, muss der Traktor danach um die Maschine herumfahren, wodurch Kulturschäden an der Bepflanzung unumgänglich sind.

Es sind Ausführungsformen bekannt, bei denen der die Rohrtrommel tragende Bock um eine vertikale Achse schwenkbar gelagert ist. Dies hat einerseits den Vorteil, dass die Beregnungsmaschine nicht mehr mit dem Traktor in die Beregnungsgasse hineingeschoben werden muss, sondern seitlich am Feldweg abgestellt werden kann; die Rohrtrommel wird danach um ca. 90° geschwenkt und in Arbeitstellung gebracht. Der Nachteil des Herumfahrens mit dem Traktor um die Maschine, um in Ausziehposition zu gelangen, und der damit verbundene Kulturschaden an der Bepflanzung bleibt jedoch bestehen.

Es wurden auch Ausführungformen entwickelt, bei denen das Fahrwerk und der die Rohrtrommel tragende Bock ein Teil sind, die beiden Räder des Fahrwerkes jedoch mittels Hydraulik vertikal verstellt werden können, so dass die Maschine mit dem Fahrwerk auf den Boden abgesenkt werden kann und nicht mehr auf den Rädern steht. Unterhalb des Fahrwerkes ist dabei eine Platte oder dgl. unter einem Drehkranz montiert. Beim Absenken kommt die Maschine dabei auf der Platte zu stehen, so dass sie im abgesenkten Zustand nach Belieben um 360° geschwenkt werden kann. Das Einfahren in die Beregnungsgasse kann somit in Vorwärtsrichtung erfolgen. Der Traktor wird abgehängt, die Beregnungsmaschine abgesenkt und um 180° geschwenkt. Ein Herumfahren um die Beregungsmaschine ist somit nicht mehr erforderlich, da der Traktor bereits in der für das Ausziehen des Statives richtigen Position steht. Nachteile dieser Ausführungen sind die relativ aufwendige Konstruktion, um die Räder vertikal verstellbar zu gestalten, der Verzicht auf eine Spurweitenverstellung des Radpaares, da dies noch aufwendiger wäre, und die Unmöglichkeit des seitlichen Abstellens der Maschine mit um 90° geschwenkter Rohrtrommel sowie des seitlichen Verfahrens mit geschwenkter Trommel von einer Position in die nächste.

Speziell im Gemüseanbau - also bei hochwertigen Produkten, wo auf die effiziente Ausnutzung der verfügbaren Anbauflächen großer Wert gelegt wird, spielt der Nachteil der Kulturschäden an der Bepflanzung eine große Rolle und ist häufig ausschlaggebend für die gewählte Ausführungsform einer Beregnungsmaschine. Dazu kommt noch, dass in diesen Anwendungen häufig mit der Maschine durch die Kultur gefahren wird, wobei das Stativ an einem Feldende abgestellt und das Kunststoffrohr abgelegt anstatt ausgezogen wird. Das bedingt eine entsprechende Bodenfreiheit zwischen den Rädern und eine Anpassung der Spurweite an die Zeilenabstände der Gemüsereihen. Beides ist mit den erwähnten absenkbaren Maschinen nicht gegeben.

Im deutschen Gebrauchsmuster G 92 07 045.0 ist eine Ausführungform vorgeschlagen, bei der das Stativ und der Auffahrteil des Statives an der Maschine so fest miteinander verbunden werden, dass eine gemeinsame Zugeinrichtung Zustande kommt. So kann die Beregnungsmaschine sozusagen an die Ackerschiene eines Schleppers angehängt und in die Kultur gefahren werden. Damit befinden sich Rohrtrommel und Stativ bereits zwangsläufig in der richtigen Arbeitsposition. Zum Ende des Beregnungsvorganges gerät das Stativ wieder auf das Auffahrteil und kann mit diesem für den Weitertransport verbunden werden. Der Traktor zieht die Maschine an der Vorderseite (= dem Stativ abgewandten) aus der Kultur heraus. Anschließend nimmt er die Maschine wieder stativseitig auf und fährt in die nächste Arbeitsposition. Der Nachteil dieser Lösung ist vor allem das Umhängen von der Vorderseite auf die Stativseite, weil dadurch wiederum am Feldrand mit dem Traktor herummanövriert werden muss und Kulturschäden verursacht werden.

Eine weitere Forderung, vor allem im Gemüsebau, ist die spurgleiche Einfahrt von Traktor und Beregnungsmaschine in die Beregungsgasse - wiederum um möglichst kulturschonend zu arbeiten. Das bedeutet, dass es möglich sein muß, die Maschine so an den Traktor anzuhängen, dass sich das Radpaar des Statives genau in der Spur des Traktors befindet. Nachdem sich je nach Länge des aufgewickelten Kunststoffrohres das Stativ nicht generell in der Mittelebene der Rohrtrommel befindet, muss daher eine einfache Methode gefunden werden die Anhängung der Maschine an den Traktor außermittig zu ermöglichen.

Ziel der Erfindung ist eine Beregnungsmaschine, die einerseits alle Vorteile einer zweiseitigen Verfahrbarkeit aufweist und anderseits möglichst vollständig die folgenden wichtigen Bedingungen erfüllt:
. nur einmalige Anhängungen an den Traktor beim Umstellen von einer Beregnungsposition in die nächste,
. seitliches Abstellen der Maschine am Feldrand bei quergestellter Trommel mit der Möglichkeit zwei um 180° versetzte Beregnungspositionen mit einer Aufstellung zu gestatten,
. verstellbare Spurweite und ausreichende Bodenfreiheit zwischen den Rädern
. außermittige Anhängung der Maschine an den Traktor.

Um nun zumindest die wesentlichsten dieser Forderungen zu erfüllen ist, erfindungsgemäß vorgesehen, die Zugdeichsel des Fahrwerkes der Beregnungsmaschine längsverschieblich im Fahrwerk zu lagern und an beiden Enden mit einer Kupplungsvorrichtung zu versehen und, in an sich bekannter Weise, den die Rohrtrommel tragenden Bock um eine vertikale Achse des Fahrwerkes drehbar zu lagern.

Damit ist es möglich mit der Beregnungsmaschine in eine Beregnungsgasse einzufahren, die Deichsel abzuhängen und durch das Fahrwerk der Beregnungsmaschine durchzuschieben, die Rohrtrommel samt Stativ um 180° zu schwenken, sodann das Stativ am Traktor anzuhängen und auszuziehen und nach erfolgter Beregnung, bei der das Stativ ja durch den Beregnungsschlauch wieder eingezogen worden ist, dieses am Bock zu fixieren und die Beregnungsmachine an der bereits durchgeschobenen Deichsel anzuhängen und aus der Beregnungsgasse zu manövrieren.

Zusätzliche Details wie die Fixierung der Deichsel, die Abstützung der Beregnungsmaschine etc. sind in Kenntnis der Erfindung vom Fachmann leicht zu entwerfen und zu dimensionieren und werden weiter unten anhand eines bevorzugten Ausführungsbeispieles beschrieben.

Die Erfindung wird anhand eines Ausführungsbeispieles und einer Abfolge eines Zyklus ihrer Verwendung näher beschrieben. Dabei zeigen
die Fig. 1 - 5 den Ablauf eines Beregnungszyklus,
die Fig. 6, 7, 8 und 9 unterschiedliche Befestigungsmöglichkeiten der Deichsel am Fahrwerk der Beregnungsmaschine und
die Fig. 10 und 11 zwei Varianten der Erfindung mit einer Vorrichtung zur Erhöhung der Bodenfreiheit im Fahrbetrieb.

Die Abbildungen zeigen eine zweiachsige Ausführungform, doch ist dies nicht notwendig wenn nur bei Verwendung einer einachsigen Ausführungsform für entsprechende Abstützelemente gesorgt ist. Diese Elemente können mechanisch (Spindelantrieb etc.) oder ferngesteuert hydraulisch (hydraulische Zylinder-Kolben-Einheiten) ausgebildet sein und können selbstverständlich so, wie bekanntermaßen die Räder der bzw. jeder Achse in ihrer Spurweite veränderlich sein, um an unterschiedliche Zeilenbreiten der Kulturen anpassbar zu sein. Bei der dargestellten vierrädrigen Ausführungsform erfüllen jeweils die Räder selbst die Funktion der Abstützelemente und sind bevorzugt ebenfalls in Richtung ihrer Drehachsen verschieblich und fixierbar, um auf die unterschiedlichen Zeilenbreiten der Kulturen eingestellt werden zu können.

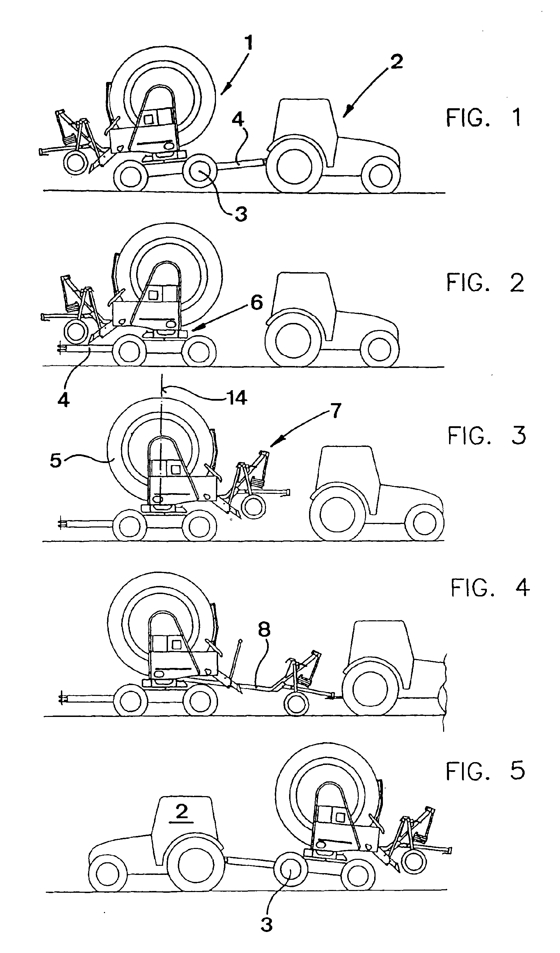

Aus Fig. 1 geht die Situation prinzipiell beim Einfahren in eine Beregnungsgasse hervor: Die Beregnungsmaschine, in ihrer Gesamtheit mit 1 bezeichnet, ist am Traktor 2 an der Ackerschiene, die zur Aufnahme verschiedener Arbeitsgeräte in der Höhe hydraulisch verstellbar ist, angehängt, wobei für den normalen Fahrbetrieb eines der Radpaare, bevorzugt das in der jeweiligen Fahrtrichtung vordere Radpaar 3 Abstand vom Boden aufweist, sodass die Beregnungsmaschine 1 wie ein normaler 1-Achs-Anhänger verfahrbar ist.

Nach Erreichen der für die Rohrtrommel 5 richtigen Position wird die Beregnungsmaschine 1 abgehängt und ihre Deichsel 4 auf die andere Seite durchgeschoben. Sodann wird (Fig. 3) der die Rohrtrommel 5 und die anderen Aufbauten tragende Bock 6 um die Hochachse 14 der Beregnungsmaschine 1 um 180° verdreht und das Regnerstativ, im folgenden kurz nur Stativ 7 genannt, wird (Fig. 4) an den Traktor angehängt und entlang der Beregnungsgasse ausgezogen, wobei der mit dem Stativ 7 verbundene Schlauch 8 von der Rohrtrommel 5 abgespult und entlang der Beregnungsgasse ausgelegt wird.

Sodann wird der Traktor 1 vom Stativ 7 gelöst und es wird die Beregnungsvorrichtung in Betrieb genommen. Dadurch wird auf passende Weise (Antrieb durch das Beregnungswasser oder externer Antrieb) die Rohrtrommel 5 so in Drehung versetzt, dass sie das Stativ 7 einholt und den Schlauch 8 aufrollt, bis schließlich die Fig. 3 gezeigte Situation (oder eine knapp davor, je nachdem welche Abschaltvorrichtung die Beregnungsmaschine aufweist) erreicht ist, worauf das Stativ 7 wieder auf den Bock 6 gehoben und fixiert wird und der Traktor 2 die Beregnungsmaschine 1 an der bereits durchgeschobenen Deichsel 4, aber nunmehr an deren anderem Ende, aufnimmt und zum nächsten Einsatz oder zurück ins Depot verfährt.

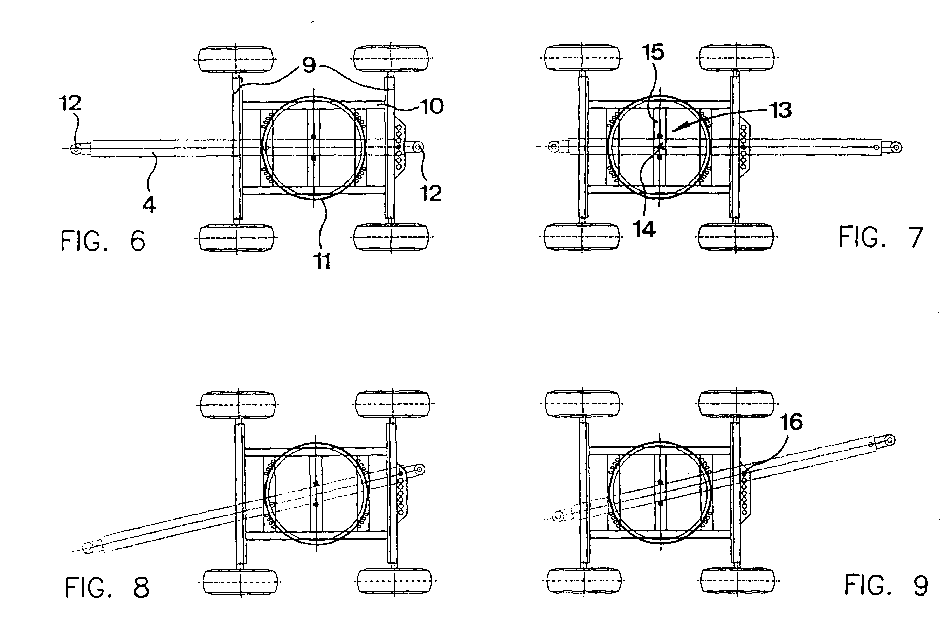

Der erfindungsgemäße Aufbau einer solchen Beregnungsmaschine ist auf den Fig. 6 - 9 näher ersichtlich:

Das Fahrwerk einer erfindungsgemäßen Beregnungsmaschine besteht im Falle einer zweiachsigen Ausrüstung aus den breitenverstellbaren Achsen 9, die durch einen Rahmen 10 miteinander verbunden sind, einem Drehkranz 11 und der bereits erwähnten durchschiebbaren Deichsel 4 mit einer Kupplungsvorrichtung 12 an jedem ihrer beiden Enden und entsprechenden Führungs- und Fixiervorrichtungen am Fahrwerk bzw. am Rahmen 10.

Diese Führungen bzw. Fixierungen bestehen bevorzugt aus einer zentralen Führung 13, die die Längsverschieblichkeit der Deichsel 4 erlaubt und darüber hinaus eine gewisse Schwenkbarkeit der Deichsel um die Hochachse 14 des Rahmens 10 und somit der Beregnungsmaschine 1 ebenfalls gestattet. Es kann diese Führung 13 beispielsweise aus einer Durchlassöffnung in einem mittig, im Bereich der Hochachse 14 angeordneten Querträger 15 bestehen, wobei die seitlichen Begrenzungen zur Vermeidung von Beschädigungen und zur Erleichterung des Durchschiebens der Deichsel 4 aus drehbar gelagerten Zylindern oder zumindest abgerundeten Flächen bestehen können, es kann aber auch diese Führung durch einen rahmenfesten Dorn gegeben sein, der fluchtend mit der Achse 14 vorgesehen ist und der in einen vertikalen Schlitz der Deichsel 4 eingesteckt ist und so jede seitliche Bewegung der Deichsel 4 im Bereich der Hochachse 14 verhindert. Da die letztgenannte Variante eine Verstärkung der Deichsel 4 im Bereich des Schlitzes notwendig macht, wird allerdings die erstgenannte Lösung oder eine damit äquivalente bevorzugt.

Die Deichsel wird bevorzugt weiters im Bereich zumindest eines der Rahmenenden bzw. im Bereich der Achsen in horizontaler Richtung geführt, um die auftretenden Momente besser übertragen zu können und zu einer möglichst gleichmäßigen Belastung sowohl der Deichsel als auch des Rahmens zu kommen.

Die Schrägstellung der Deichsel erfolgt um, wie weiter oben erläutert, die Beregnungsmaschine 1 durch den Traktor 2 auch außermittig schleppen zu können, sodass das Stativ mittig zum Traktor steht.

Die Fixierung der Winkellage der Deichsel 4 bezüglich der Fahrtrichtung des Fahrwerkes erfolgt im einfachsten Fall durch einen Bolzen 16, der durch ein entsprechendes vertikales Loch der Deichsel 4 und eines einer Reihe von Löchern, die am Fahrwerk 10 vorgesehen sind, gesteckt wird. Wesentlich ist dabei nur, dass ein mittiges Loch vorgesehen ist, das für den normales Fahrbetrieb unbedingt erforderlich ist. Es ist selbstverständlich möglich, zwei derartige Lochreihen, jeweils eine an jedem Fahrwerkende der Beregnungsmaschine, vorzusehen um die Fixierung immer an der Seite vornehmen zu können, an der der Traktor jeweils an die Beregnungsmaschine gekoppelt wird um so zu vermeiden, daß man rund um die Beregnungsmaschine gehen muß, was die Rüstzeit weiter verkürzt.

Es ist selbstverständlich möglich, die Fixierung der Deichsel 4 sowohl in ihrer Winkellage als auch in ihrer Längslage nicht wie im dargestellten Ausführungsbeispiel händisch und mechanisch sondern ferngesteuert und durch eine Hydraulik oder, in Ausnahmefällen, durch elektrische Stellmotoren vornehmen zu lassen, doch wird dies nur bei sehr großen und schweren Maschinen sinnvoll einsetzbar sein.

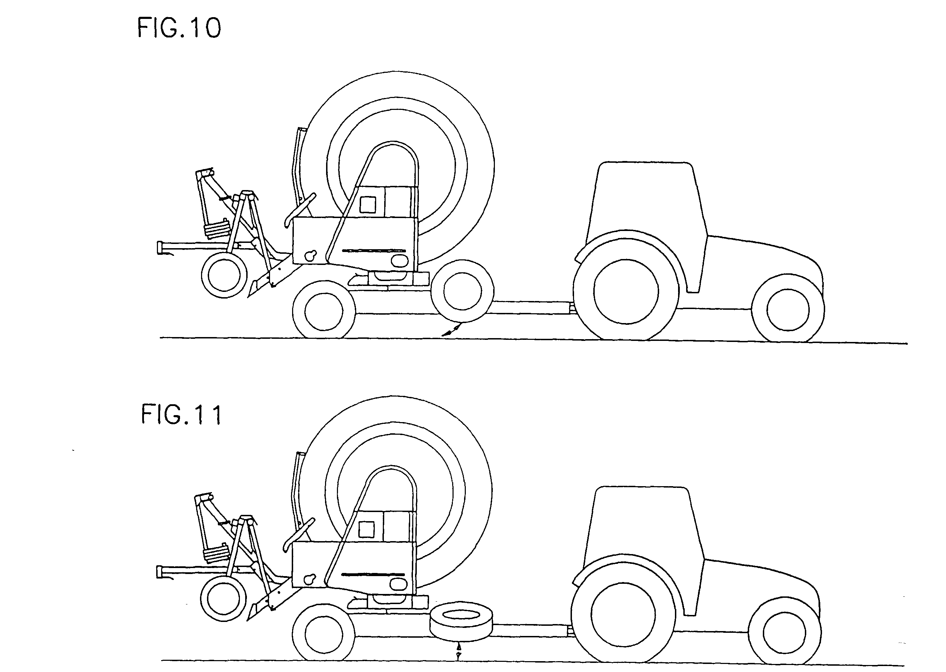

Die Fig. 10 und 11 zeigen eine Ausgestaltung betreffend die Beweglichkeit der Räder der erfindungsgemäßen Beregnungsmaschine, bei Fig. 10 sind die Räder anhebbar (verschieblich oder um eine horizontale Querachse verschwenkbar) ausgebildet, bei Fig. 11 um eine im wesentlichen horizontale, parallel zur Fahrtrichtung verlaufende Schwenkachse verschwenkbar ausgebildet um jeweils die Räder, die beim Verfahren nicht benötigt werden höher als nur durch Schrägstellung der Deichsel anheben zu können. Dies ist insbesondere bei großen Beregnungsmaschinen vorteilhaft oder sogar notwendig, da bei entsprechend großen Rädern die bei solchen Maschinen zur Verringerung der Bodenbelastung eingesetzt werden müssen, der absolute Höhengewinn beim Anheben der Deichsel nur gering ist, sodass die Gefahr besteht, dass auch diese Räder Bodenberührung haben was die Manövrierbarkeit des gesamten aus Traktor und Beregnungsmaschine bestehenden Zuges stark beeinträchtigt und unter Umständen sogar ein Weiterfahren unmöglich macht.

Die Erfindung ist nicht auf das dargestellte Ausführungsbeispiel beschränkt sondern kann verschiedentlich abgewandelt werden. Dies betrifft nicht nur die Anzahl der verwendeten Achsen sondern auch zusätzliche Stütz- und Nivelliervorrichtungen, insbesondere bei großen Geräten, die Art und Weise wie der Bock 6 mit den Aufbauten gegenüber dem Fahrwerk verdrehbar ist, dies muss nicht durch einen Drehkranz erfolgen sondern kann durch Laufrollen auf einem Laufkranz geschehen oder auf ähnliche Weise und betrifft auch die Ausgestaltung und Fixierung der Deichsel 4 selbst, die vom Fachmann des Landmaschinenbaus in Kenntnis der Erfindung an das jeweilige Einsatzgebiet und die zur Verfügung stehenden Geräte angepasst werden kann.

So kann insbesondere bei einachsigen Ausführungen die Drehachse des Bockes deutlichen Abstand von dessen Schwerpunkt aufweisen, um so in beiden Hauptpositionen des Bockes bezüglich des Fahrwerkes zu eindeutig definierten Lastverhältnissen bezüglich der Achse und der Deichsel und damit zu eindeutigen Stützlasten am Traktor zu kommen.

Um das oben genannte Ziel zu erreichen, ist es selbstverständlich auch möglich, die Achse bzw. die einzeln aufgehängten Räder in Längsrichtung verschieblich (z.Bsp. mittels hydraulischer Zylinder-Kolben-Einheiten) auszugestalten, wobei auch Doppelachsen vorgesehen sein können.

Eine wieder andere Lösung besteht darin, das Fahrwerk kurz zu halten und den Schwerpunkt hoch zu legen, um einerseits im angehängten Zustand zu großen Kippwinkeln zu kommen und anderseits so den Schwerpunkt relativ stark exzentrisch zur Achse zu verlagern, was ebenfalls relativ eindeutige Lastsituationen und somit stabile Fahrzustände schafft.

## Patentansprüche

1. Beregnungsmaschine, die ein Fahrwerk mit einer Deichsel (4), eine Rohrtrommel (5) mit einem auf- und abwickelbaren Kunststoffrohr (8), einen Turbinen-, Wasserkolben-, Verbrennungsmotor- oder Elektromotorantrieb, sowie ein auf das Fahrwerk zuladbares Stativ (7) oder Wagen mit Großflächenregner, Düsenausleger oder ähnliche, der Wasserverteilung dienende Einrichtung aufweist, dadurch gekennzeichnet, daß die Deichsel (4) längsverschieblich im Fahrwerk gelagert und an beiden Enden mit einer Kupplungsvorrichtung (12) versehen ist und daß, in an sich bekannter Weise, ein die Rohrtrommel (5) tragender Bock (6) um eine vertikale Achse (14) des Fahrwerkes drehbar gelagert ist.

2. Beregnungsmaschine nach Anspruch 1, dadurch gekennzeichnet, daß die Deichsel (4) bezüglich der Hochachse (14) des Fahrwerkes in zumindest zwei Winkellagen bringbar und in diesen fixierbar ist.

3. Beregnungsmaschine nach Anspruch 2, dadurch gekennzeichnet, daß die Fixierung der Deichsel (4) durch zumindest eine Lochreihe am Fahrwerk in Verbindung mit zumindest einem Loch in der Deichsel (4) und einem Verbindungsbolzen (16) erfolgt.

4. Beregnungsmaschine nach einem der vorangehenden Ansprüche, dadurch gekennzeichnet, daß die Deichsel (4) im Bereich der Hochachse (14) um diese verschwenkbar und längsverschieblich am Fahrwerk gelagert ist.

5. Beregnungsmaschine nach einem der vorangehenden Ansprüche mit zwei Achsen, dadurch gekennzeichnet, daß zumindest die Räder (3) einer der Achsen vertikal verschieblich oder um eine horizontale, im wesentlichen in Fahrtrichtung oder quer dazu verlaufende, Achse verschwenkbar gelagert sind.

6. Beregnungsmaschine nach einem der Ansprüche 1 bis 4 mit einer Achse, dadurch gekennzeichnet, daß der Schwerpunkt des Bockes (6) einen Abstand, bevorzugt einen solchen über 20 cm und besonders bevorzugt etwa einen Abstand, der im wesentlichen dem Radius des Rades (3) entspricht, von der Hochachse (14) aufweist.

7. Beregnungsmaschine nach einem der Ansprüche 1 bis 4 mit einer Achse, dadurch gekennzeichnet, daß die Räder (3) bzw. die Achsen in Fahrtrichtung verschieblich am Fahrwerk gelagert sind.
